# EUROPÄISCHE PATENTSCHRIFT

(11) **EP 4 415 555 B1**
(45) Veröffentlichungstag und Bekanntmachung des Hinweises auf die Patenterteilung: **03.09.2025**
(21) Anmeldenummer: 22800254.9
(22) Anmeldetag: 10.10.2022
(51) Int. Cl.: A23K 20/10, A23K 20/105, A23K 20/142, A23K 50/30, A61K 31/195, C07C 229/00, C07C 279/14

(54) **VERWENDUNG VON GUANIDINOESSIGSÄURE IN ENERGIEARMEM FUTTER FÜR SCHWEINE WÄHREND DER MASTPHASE**
USE OF GUANIDINE ACETIC ACID IN FEED OR LOW ENERGY CONTENT FOR PIGS DURING THE FATTENING PHASE
UTILISATION DE L' ACIDE ACÉTIQUE DE GUANIDINE DANS LES ALIMENTS À FAIBLE TENEUR ÉNERGÉTIQUE POUR PORCS PENDANT LA PHASE D'ENGRAISSEMENT

(30) Priorität: 13.10.2021 DE 102021126581
(43) Veröffentlichungstag der Anmeldung: 21.08.2024
(73) Patentinhaber: Alzchem Trostberg GmbH, 83308 Trostberg (DE)
(72) Erfinder: LOIBL, Peter, 83329 Waging am See (DE); RINGEL, Judith, 48366 Laer (DE)
(74) Vertreter: Weickmann & Weickmann PartmbB
(86) Internationale Anmeldenummer: PCT/EP2022/078059
(87) Internationale Veröffentlichungsnummer: WO 2023/061916

(56) Entgegenhaltungen:
- CN-A- 111 066 972
- CN-A- 111 990 546
- LIPINSKI KRZYSZTOF ET AL: "Effects of Betaine on Energy Utilization in Growing Pigs - A Review", ANNALS OF ANIMAL SCIENCE, vol. 12, no. 3, May 2012 (2012-05-01), pages 291 - 300, XP093014236, ISSN: 1642-3402, DOI: 10.2478/v10220-012-0024-4
- J. OWAGA: "Boosting energy metabolism in poultry (and pig) diets", 25 October 2020 (2020-10-25), pages 1 - 9, XP002808433, Retrieved from the Internet <URL:https://web.archive.org/web/20201025111022/https://www.thepoultrysite.com/articles/boosting-energy-metabolism-in-pig-and-poultry-diets> [retrieved on 20230116]
- ABUDABOS ALAELDEIN M. ET AL: "The Relationship Between Guanidino Acetic Acid and Metabolisable Energy Level of Diets on Performance of Broiler Chickens", ITALIAN JOURNAL OF ANIMAL SCIENCE, vol. 13, no. 3, January 2014 (2014-01-01), pages 3269, XP055908516, DOI: 10.4081/ijas.2014.3269

## Beschreibung

Die vorliegende Erfindung betrifft die Verwendung einer Zusammensetzung enthaltend Guanidinoessigsäure in der Mast von Schweinen mit energiearmem Futter. Weiterhin betrifft die Erfindung ein Verfahren zur Verbesserung der Energieverwertung eines energiearmen Futters durch Schweine durch Zugabe von Guanidinoessigsäure sowie ein Futtermittel für Schweine umfassend ein energiearmes Futter und Guanidinoessigsäure. Die Optimierung von Futtermitteln kann unter vielen Gesichtspunkten erfolgen. Zum einen müssen alle Nährstoffe, die ein Tier benötigt, in ausreichender Menge im Futtermittel bereitstehen. Neben dem Nährstoffbedarf ist die Tiergesundheit ein weiterer Faktor, der eine optimale Futtermittelzusammensetzung bestimmt. Darüber hinaus sind zahlreiche weitere Faktoren, wie z.B. Umweltaspekte, Vorschriften zur Düngung bei der Futtermittelproduktion und zu Emissionen zu beachten. Bei all diesen Anforderungen nimmt die Fütterung in der Tierhaltung, insbesondere von Mastschweinen eine zentrale Rolle ein.

Um die Anforderungen an moderne Futtermittel zu erfüllen, werden inzwischen unterschiedliche Futtermitteladditive verwendet. An vorderster Stelle werden Mängel in der Futtermittelmischung durch die gezielte Zugabe von essentiellen und wachstumslimitierenden Nährstoffen ausgeglichen. Beispielhaft seien hier essentielle Aminosäuren wie Lysin oder Methionin, Calcium- und andere Metallsalze oder Vitamine genannt. Es werden aber auch Aromastoffe oder körpereigene Substanzen eingesetzt, die den Zellstoffwechsel beeinflussen. Demgegenüber spielt der Einsatz von Kreatin oder Guanidinoessigsäure in der Schweinemast bisher, im Gegensatz zum Geflügel, eine eher untergeordnete Rolle. In Futtermitteln für Geflügel ist Guanidinoessigsäure (syn. Glycocyamin, N-Guanylglycin, N-Amidinoglycin; C₃H₇N₃O₂; CAS-Nr. 352-97-6) seit einiger Zeit als Futtermittelzusatz auf dem Markt erhältlich.

Im Gegensatz zu Kreatin bzw. Kreatin-Monohydrat weisen Guanidinoessigsäure und deren Salze in saurer wässriger Lösung eine deutlich höhere Stabilität auf und sie werden erst unter physiologischen Bedingungen in Kreatin umgewandelt. Guanidinoessigsäure wird hierbei erst nach der Resorption, vor allem in der Leber, in Kreatin umgewandelt. Somit wird im Gegensatz zum Kreatin der überwiegende Teil der verabreichten bzw. gefütterten Verbindungen, Guanidinoessigsäure und/oder Salze der Guanidinoessigsäure, nicht durch Instabilitätsreaktionen, z.B. im Magen, abgebaut, sondern steht tatsächlich bei den entsprechenden physiologischen Stoffwechselreaktionen zur Verfügung.

So wird in WO 2005/120246 A1 beschrieben, dass die Supplementierung der Vorläuferverbindung von Kreatinylphosphat, nämlich mit Guanidinoessigsäure, bei vorwiegend vegetarischen Diäten zur Verbesserung der Futteraufnahme, zur Steigerung der Mastleistung, des Muskelfleischansatzes, der Fleischqualität und/oder der Reproduktionsleistung bei Hühnern beiträgt.

In WO 2006/092298 A1 werden Salze der Guanodinoessigsäure beschrieben, die eine erhöhte Wasserlöslichkeit bzw. Bioverfügbarkeit aufweisen.

Der Einsatz von Guanidinoessigsäure in der Schweinemast zur Reduzierung der Caudophagie bzw. zur Verminderung der Aggressivität von Schweinen wird in der Offenlegungsschrift WO 2021/175677 A1 offenbart.

In einer Studie von Weber et al. (veröffentlicht in A. Zeyner, H. Kluth, M. Bulang, M. Bochnia und M. Bachmann (Hrsg.), 14. Tagung Schweine und Geflügelernährung, 21. - 23. November, 2017, Lutherstadt Wittenberg, Institut für Agrar- und Ernährungswissenschaften, Universität Halle-Wittenberg) wird der Einfluss von Guanidinoessigsäure in einem üblichen Futtermittel untersucht. In der Studie wird eine etwas verbesserte Futterverwertung, allerdings nur eine leichte tägliche Zunahme an der Schwelle zur Signifikanz festgestellt. Gemäß der Studie wird eine etwas geringere Futteraufnahme der Schweine durch die Zugabe von Guanidinoessigsäure bei Verfütterung energiereichen Futters gezeigt. Der Effekt von Guanidinoessigsäure auf die Energieverwertung von Schweinen, insbesondere bei Verwendung von energiearmem Futter wird von Weber et al. nicht untersucht.

Die energiereichen Bestandteile von Futtermitteln sind im Vergleich zu energiearmen Bestandteilen oft nur begrenzt verfügbar. Eine Reduktion des Energiegehalts bei gleichbleibender Leistung könnte es also ermöglichen, Tiere ressourcenschonender zu ernähren. Jedoch führt eine Reduktion des Energiegehalts der Ration in der Regel zu einer Erhöhung der Futteraufnahme, die meist die Vorteile einer energiearmen Ernährung zunichtemacht oder pro kg Gewichtszuwachs sogar den Ressourcenverbrauch noch weiter steigert.

K. Lipinski, et al. (An. Anim. Sci., Vol. 12, No. 3 (2012), 291-300) beschreibt Effekte von Betain auf die Energienutzung bei der Aufzucht von Schweinen. J. Owaga ("Boosting energy metabolism in poultry (and pig) diets", www.thepoultrysite.com/articles/boosting-energy-metabolism-in-pig-and-poultry-diets, 25. Oktober 2020, Seiten 1-9) beschreibt die Fütterung von Geflügel. A.M. Abudabos et al. (Italian Journal of Animal Science 2014, Vol. 13:3269; pages 548-556) beschreibt Studien zur Ergänzung von Energie-reduziertem Hühnerfutter mit Guanidinoessigsäure. CN 111 066 972 A beschreibt ein Futter für die Schweinemast umfassend unter anderem Guanidinoessigsäure. CN 111 990 546 A beschreibt die Zugabe von Guanidinoessigsäure zu Schweinefutter.

Zusammenfassend bleibt festzuhalten, dass noch keine wirtschaftliche Methode existiert, um die Nachteile einer energiearmen Ernährung von Schweinen vollständig auszugleichen.

Der vorliegenden Erfindung liegt daher die Aufgabe zugrunde, einen Futtermittelzusatz für Schweine zur Verfügung zu stellen, der bei der Verfütterung von energiearmem Futter das Gewicht der Tiere am Ende der Mast im Vergleich zur Fütterung mit einem energiearmen Futter allein deutlich erhöht, und der möglichst das Gewicht erzielt, das bei der Verfütterung mit einer ausgewogenen energiereichen Diät erzielt wird.

Gelöst wird diese Aufgabe durch eine Verwendung gemäß Anspruch 1. Somit ist gemäß einer ersten Ausführung die Verwendung i) einer Zusammensetzung enthaltend Guanidinoessigsäure und ii) eines energiearmen Futters für Schweine mit einem Rohproteingehalt im Bereich von 10,0 bis 20,0 Gew.-% (bezogen auf das Gesamtgewicht des Futters) und einem Energiegehalt im Bereich von 11,4 bis 12,9 MJ ME/kg (bezogen auf das Gesamtgewicht des Futters) während der Mast der Schweine ab einem Lebendgewicht von ≥ 27 kg pro Schwein, zur Verbesserung der Energieverwertung des Futters durch die Schweine, Gegenstand der vorliegenden Erfindung.

Unter Energieverwertung wird dabei die Menge an umsetzbarer Energie (metabolischer Energie ME) verstanden, die zu einer Gewichtszunahme des Tieres von einem Kilogramm führt. Eine Verbesserung der Energieverwertung wird also durch eine Erniedrigung des Quotienten aus metabolischer Energie des aufgenommenen Futters pro Kilogramm Gewichtszunahme des Tieres definiert.

Durch die Formulierung "bezogen auf das Gesamtgewicht des Futters" bzw. "bezogen auf das gesamte Futter" werden die entsprechenden Werte auf ein Futter mit 88% Trockenmasse bezogen.

Wird im Folgenden von Guanidinoessigsäure gesprochen, ist darunter nicht nur die freie Säure, sondern auch deren Salze zu verstehen, sofern im Text nicht explizit auf die freie Säure Bezug genommen wird.

Die vorliegende Erfindung betrifft insbesondere die Verwendung von Guanidinoessigsäure in der Mast von Schweinen, wobei eine Zusammensetzung enthaltend Guanidinoessigsäure und ein energiearmes Futter eingesetzt wird. Dabei ist gemäß der vorliegenden Erfindung unter einem energiearmen Futter ein Futter zu verstehen, das vorzugsweise einen Gehalt an Rohprotein im Bereich von 14,0 bis 18,0 Gew.-% (bezogen auf das gesamte Futter) und einen Energiegehalt von 11,4 bis 12,9 MJ ME/kg aufweist.

Der Gehalt an Rohprotein wird dabei über die VDLUFA Methode zur Bestimmung von Rohprotein bestimmt (VDLUFA Methodenbuch III, 3. Erg. 1993: Rohprotein, 4.1.1). Dabei wird über Schwefelsäureaufschluss, Destillation und Titration des freiwerdenden Ammoniaks der Stickstoffgehalt des Futters ermittelt. Eiweiß enthält im Schnitt 16% Stickstoff. Deshalb wird der Rohproteingehalt durch die Multiplikation des Stickstoffgehalts mit 6.25 bestimmt.

Der Gehalt an umsetzbarer Energie (ME, engl. Metabolisable Energy) des Futters wird dabei über die folgende Formel (Gesellschaft für Ernährungsphysiologie, 2008: Prediction of metabolisable energy of compound feeds for pigs. Proceedings of the Society of Nutrition Physiology 17, 199-204) berechnet: ME (MJ/kg) = 0,021503 (MJ/g) × XP (g/kg) + 0,032497 (MJ/g) × XL (g/kg) - 0,021071 (MJ/g) × Rohfaser (g/kg) + 0,016309 (MJ/g) × Stärke (g/kg) + 0,014701 (MJ/g) × "verdaulicher Rest" (g/kg)

**Die Formel** beinhaltet folglich die analysierten Gehalte an Rohprotein (XP), verdaulichem Rohfett (XL), Rohfaser, Stärke und dem "verdaulichen Rest" (Differenz der organischen Masse und der Summe aus XP, XL, Rohfaser und Stärke jeweils in g/kg).

Bei kommerziell erhältlichen Futtermitteln ist in der Regel der Rohproteingehalt, der Rohfettgehalt, der Rohfaseranteil und der Stärkegehalt angegeben, so dass der Gehalt an umsetzbarer Energie direkt berechnet werden kann. Der Rohproteingehalt, der Rohfettgehalt, der Rohfaseranteil und der Stärkegehalt kann auch anhand gängiger VDLUFA-Methoden ermittelt werden (VDLUFA Methodenbuch III: 3. Erg. 1993, Abschnitt 4.1.1 (Rohproteinbestimmung); 2. Erg. 1988, Abschnitt 5.1.1 (Rohfettbestimmung); 8. Erg. 2012, Abschnitt 7.2.1 (Stärkebestimmung); 3. Erg. 1993, Abschnitt 6.1.1 (Rohfaserbestimmung)).

Weiter ist vorgesehen, dass die Zusammensetzung enthaltend Guanidinoessigsäure und das energiearme Futter während der Mast der Schweine ab einem Lebendgewicht von ≥ 27 kg, bevorzugt von ≥ 50 kg, besonders bevorzugt von über 60 kg pro Schwein (nachfolgend auch als Mastphase bezeichnet) eingesetzt wird. Somit erfolgt die erfindungsgemäße Verwendung außerhalb der ersten Wachstumsphase der Ferkel bis zu einem Gewicht von 27 kg pro Schwein (nachfolgend auch Aufzucht genannt) sowie bevorzugt auch außerhalb der Vormast der Schweine, die im Sinne der vorliegenden Erfindung durch ein Lebendgewicht bis 60 kg pro Schwein gekennzeichnet ist (nachfolgend auch Vormast).

Gemäß der vorliegenden Erfindung wird eine Zusammensetzung eingesetzt, die Guanidinoessigsäure enthält.

Überraschenderweise hat sich nunmehr in Fütterungsversuchen bei Schweinen gezeigt, dass die Verabreichung einer Zusammensetzung enthaltend Guanidinoessigsäure, zu dem gewünschten Nutzen führt, nämlich bei der Verfütterung von energiearmem Futter eine Mastleistung zu erreichen, die ansonsten nur mit einem energiereichen Futter zu erreichen wäre. In der Fütterungsstudie hat sich gezeigt, dass durchaus ein Energiegehaltsunterschied von 0,3 MJ ME/kg Futter durch den Zusatz von Guanidinoessigsäure vollkommen ausgeglichen werden kann. Bevorzugt wird durch die Verwendung von Guanidinoessigsäure ein Energiedefizit von 0,1 MJ ME/kg Futter und mehr, besonders bevorzugt von 0,1 - 0,5 MJ ME/kg Futter und ganz besonders bevorzugt von 0,2 - 0,4 MJ ME/kg Futter ausgeglichen.

Weiterhin überraschend hat sich gezeigt, dass der Ausgleich des Energieinhaltes des Futters erst in der Mastphase vollständig sichtbar wird. Der Einsatz von Guanidinoessigsäure in dieser Phase führte zu einer Verbesserung der Energieverwertung im Vergleich zu einer Negativkontrollgruppe mit analytisch gleichem Energiegehalt. Es war also weniger Futter bzw. umsetzbare Energie nötig, um zumindest die gleiche oder sogar eine höhere Mastleistung zu erreichen. Als Mastleistung wird hier die Zunahme an Körpermasse pro Tag bezeichnet. Die mit Guanidinoessigsäure versorgten Gruppen erreichten sogar ein Leistungsniveau, das besser war, als das einer mit deutlich mehr Energie versorgten Positivkontrollgruppe. Obwohl Guanidinoessigsäure selbst keinen nennenswerten Energiegehalt hat, kann durch die Verbesserung der Versorgung der Tiere mit Guanidinoessigsäure und damit auch mit Kreatin, ein Energiedefizit im Futter ausgeglichen werden.

Die Verwendung von Guanidinoessigsäure in energiearmen Futter zur Verbesserung der Energieverwertung des Futters durch Schweine, um ein Energiedefizit von mindestens 0,1 MJ ME/kg gegenüber einem entsprechenden Futter ohne Guanidinoessigsäure auszugleichen ist daher ein weiterer Gegenstand der vorliegenden Erfindung genauso wie die Verwendung von Guanidinoessigsäure in energiearmen Futter zur Verbesserung der Energieverwertung des Futters durch Schweine gegenüber dem energiearmen Futter alleine.

Gemäß der vorliegenden Erfindung ist vorgesehen, dass das energiearme Futter für die Schweine einen Rohproteingehalt von 14,0 bis 18,0 Gew.-% aufweist. Gemäß einer weiter bevorzugten Verwendung ist vorgesehen, dass das energiearme Futter für die Schweine einen Rohproteingehalt von mindestens 14,5 Gew.-%, noch weiter bevorzugt von mindestens 15,0 Gew.-%, noch weiter bevorzugt von mindestens 15,6 Gew.-%, besonders bevorzugt von mindestens 16,0 Gew.-% und ganz besonders bevorzugt von mindestens 16,2 Gew.-% (bezogen auf das Gesamtgewicht des Futters) aufweist. Gleichzeitig oder unabhängig hiervon kann das energiearme Futter für die Schweine einen Rohproteingehalt von höchstens 17,8 Gew.-%, weiter bevorzugt von höchstens 17,6 Gew.-%, noch weiter bevorzugt von höchstens 17,4 Gew.-% und besonders bevorzugt von höchstens 17,2 Gew.-% (bezogen auf das Gesamtgewicht des Futters) aufweisen.

Somit ist gemäß einer weiter bevorzugten Verwendung vorgesehen, dass das energiearme Futter für die Schweine einen Rohproteingehalt im Bereich von 15,0 bis 17,8 Gew.-%, weiter bevorzugt im Bereich von 15,6 bis 17,8 Gew.-%, noch weiter bevorzugt im Bereich von 16,0 bis 17,8 Gew.-% und noch weiter bevorzugt im Bereich von 16,2 bis 17,8 Gew.-% (bezogen auf das Gesamtgewicht des Futters) aufweist. Noch weiter bevorzugt ist ein Futter, das einen Rohproteingehalt im Bereich von 16,8 bis 17,6 Gew.-% und ganz besonders bevorzugt von 17,2 ± 0,2 Gew.-% (bezogen auf das Gesamtgewicht des Futters) aufweist.

Gemäß der vorliegenden Erfindung ist vorgesehen, dass das Futter einen Energiegehalt von 11,4 bis 12,9 MJ ME/kg bezogen auf das gesamte Futter aufweist. Gemäß einer bevorzugten Verwendung ist vorgesehen, dass das verwendete energiearme Futter für Schweine einen Energiegehalt von mindestens 11,4 MJ ME/kg, weiter bevorzugt von mindestens 11,8 MJ ME/kg, noch weiter bevorzugt von mindestens 12,0 MJ ME/kg, noch weiter bevorzugt von mindestens 12,2 MJ ME/kg und ganz besonders bevorzugt von mindestens 12,4 MJ ME/kg (jeweils bezogen auf das Gesamtgewicht des Futters) aufweist. Gleichzeitig oder unabhängig hiervon kann das energiearme Futter für die Schweine einen Energiegehalt von höchstens 12,9 MJ ME/kg, weiter bevorzugt höchstens 12,8 MJ ME/kg, und ganz besonders bevorzugt von höchstens 12,7 MJ ME/kg (jeweils bezogen auf das gesamte Futter) aufweisen.

Somit ist gemäß einer weiter bevorzugten Verwendung vorgesehen, dass das energiearme Futter für Schweine einen Energiegehalt im Bereich von 12,0 bis 12,8 MJ ME/kg (bezogen auf das gesamte Futter), weiter bevorzugt im Bereich von 12,2 bis 12,8 MJ ME/kg, noch weiter bevorzugt im Bereich von 12,4 bis 12,8 MJ ME/kg, noch weiter bevorzugt im Bereich von 12,6 bis 12,8 MJ ME/kg und ganz besonders bevorzugt von 12,7 ± 0,05 MJ ME/kg (jeweils bezogen auf das gesamte Futter) aufweist.

Die Verwendung von Guanidinoessigsäure in Kombination mit energiearmem Futter ist besonders in der Mastphase von Vorteil, sobald die Schweine ein Gewicht von 60 kg erreicht haben. Die Guanidinoessigsäuregabe ist bis zu einem Gewicht der Schweine von 110 kg besonders vorteilhaft. Der Einsatz von Guanidinoessigsäure kann aber auch darüber hinaus die Energieverwertung der Tiere verbessern, auch wenn mit zunehmendem Alter und Gewicht der Proteinbedarf in der Diät der Tiere sinkt. Auch in der Vormast, bei einem Gewicht der Tiere von ca. 27 - 60 kg, kann Guanidinoessigsäure zur Unterstützung der Energieverwertung gegeben werden.

Es hat sich gezeigt, dass die erfindungsgemäße Verwendung der Guanidinoessigsäure nicht auf die Substanz als solche beschränkt ist. Vielmehr kann sowohl Guanidinoessigsäure als solche, nämlich als freie Säure, oder auch ein Salz der Guanidinoessigsäure eingesetzt werden.

Besonders bevorzugt kann dabei als Salz, ein Salz ausgewählt aus der Gruppe der Alkali- oder Erdalkalisalze der Guanidinoessigsäure eingesetzt werden. Ganz besonders bevorzugt können hierbei Natrium-Guanidinoacetat, Kalium-Guanidinoacetat, Magnesium-Guanidinoacetat oder Calcium-Guanidinoacetat eingesetzt werden.

Besonders bevorzugt ist jedoch die Verwendung einer Zusammensetzung, die Guanidinoessigsäure als freie Säure enthält, insbesondere bevorzugt ist eine Zusammensetzung die nur die freie Säure und nicht deren Salze enthält.

Die Guanidinoessigsäure enthaltende Zusammensetzung wird bevorzugt als Feststoff in Pulver- oder Granulatform eingesetzt, kann aber auch in Form einer wässrigen Lösung, als Pastillen, Kapseln, Pellets oder Gelee eingesetzt werden. Unter einer Guanidinoessigsäure enthaltenden Zusammensetzung ist im Sinne dieser Erfindung auch die Verwendung von Guanidinoessigsäure als Reinstoff ohne weitere Zusatzstoffe zu verstehen.

Die Zusammensetzung enthaltend Guanidinoessigsäure kann weitere ernährungsphysiologisch wirksame Stoffe, zum Beispiel aus der Reihe der Kohlenhydrate, Fette, Aminosäuren, Proteine, Vitamine, Mineralstoffe, Spurenelemente, Methylgruppen-Donoren sowie Derivate dieser Stoffe und Mischungen davon, enthalten. Bevorzugt sind diesbezüglich Aminosäuren, insbesondere Lysin, Methionin, Threonin, Tryptophan und Valin in der Zusammensetzung enthalten. Weiterhin kann die Zusammensetzung Vitamine, wie z. B. Vitamin A, Vitamin D3, Vitamin E, Nicotinsäure, Nicotinsäureamid und β-Carotin beinhalten. Die eben genannten Stoffe können natürlich auch dem Futtermittel direkt zugemischt werden.

Bevorzugt wird Guanidinoessigsäure in Form eines Granulates eingesetzt, dass zumindest ein Bindemittel enthält. Als Bindemittel kommen insbesondere ernährungsphysiologisch wirksame Stoffe in Frage, die bindend wirken und eine gute Granulierung der Zusammensetzung ermöglichen, wie z. B. Glycin, Stärke oder Zucker. Als Bindemittel geeignet sind darüber hinaus z. B. Methylcellulose, Ethylcellulose, Carboxymethylcellulose, Carboxyethylcellulose, Carboxypropylcellulose, Hydroxypropylmethylcellulose, Hydroxymethylcellulose, mikrokristalline Cellulose, Ethylmethylcellulose und andere Cellulose-Derivate, Hydroxypropylstärke, pregelatinisierte oder modifizierte Stärke, Zuckersirup, Dextrin, Gelatine, Propylvinylalkohol, Polyvinylpyrrolidon, Xanthan, Gummiarabicum, Natriumchlorid, Natriumcarbonat, Natriumhydrogencarbonat und Glycerin sowie deren Mischungen. Zur Verbesserung der Fließfähigkeit des Granulates kann es von Vorteil sein, dass diese ein Fließhilfsmittel, insbesondere eine hydrophile und/oder hydrophobe Kieselsäure und/oder Zuschlagsstoffe auf silikatischer Basis und/oder Fettsäuren und/oder deren Salze, wie Stearinsäure oder Palmitinsäure sowie deren Natrium-, Kalium- und CalciumSalze enthalten.

Das Bindemittel ist bevorzugt in Mengen von 0,05 bis 15 Gew.-%, insbesondere 0,1 bis 1,5 Gew.-% in der granulierten Guanidinoessigsäure-Zusammensetzung enthalten. Die Korngröße geeigneter Granulate liegt bevorzugt zwischen 100 und 850 µm, wobei vorzugsweise weniger als 10 Gew.-% der Partikel unter 100 µm und weniger als 10 Gew.-% der Partikel über 850 µm liegen. Die Formlinge haben dementsprechend vorzugsweise einen Gehalt an Guanidinoessigsäure bzw. Guanidinoessigsäuresalzen von 85 bis 99,95 Gew.-%, insbesondere 95 bis 98,5 Gew.-%. Fließmittel und sonstige Zuschlagsstoffe können in dem Granulat mit bis zu 5 Gew.-% vorhanden sein.

Bevorzugt wird Guanidinoessigsäure in einer Menge von mindestens 0,01 Gew.-%, besonders bevorzugt von mindestens 0,02 Gew.-%, weiter bevorzugt von mindestens 0,03 Gew.-% und ganz besonders bevorzugt von mindestens 0,04 Gew.-% eingesetzt. Die Obergrenze für die eingesetzte Guanidinoessigsäure ist bevorzugt 0,20 Gew.-%, weiter bevorzugt höchstens 0,15 Gew.-%, weiter bevorzugt höchstens 0,12 Gew.-%, besonders bevorzugt höchstens 0,10 Gew.-% und ganz besonders bevorzugt höchstens 0,08 Gew.% (bezogen auf das Gesamtgewicht des Futters).

Gemäß einer bevorzugten Ausführung der erfindungsgemäßen Verwendung ist daher vorgesehen, dass die Guanidinoessigsäure in einer Menge von 0,01 bis 0,20 Gew.-%, bevorzugt von 0,02 bis 0,15 Gew.-% und besonders bevorzugt von 0,04 bis 0,10 Gew.-% (jeweils bezogen auf das Gesamtgewicht des energiearmen Futters), eingesetzt wird.

Gemäß einer bevorzugten Ausführung der Erfindung kann vorgesehen sein, dass die Verwendung derart erfolgt, dass die Zusammensetzung enthaltend Guanidinoessigsäure als Feststoffzubereitung vermengt mit dem energiearmen Futter für die Schweine bereitgestellt wird. Weiter bevorzugt wird die Zusammensetzung als Feststoffzubereitung vermengt mit dem energiearmen Futter für die Schweine bereitgestellt, wobei die Zusammensetzung die Guanidinoessigsäure in einer Menge von 0,01 bis 0,20 Gew.-%, bevorzugt von 0,02 bis 0,15 Gew.-% und besonders bevorzugt von 0,04 bis 0,10 Gew.-% (bezogen auf das Gesamtgewicht des Futters) enthält.

Gemäß einer weiter bevorzugten Ausführung der Erfindung erfolgt die Verwendung derart, dass die Zusammensetzung als Feststoffzubereitung vermengt mit dem energiearmen Futter für die Schweine bereitgestellt wird, wobei die Zusammensetzung aus Guanidinoessigsäure in einer Menge von 0,03 bis 0,08 Gew.-% (bezogen auf das Gesamtgewicht des Futters) besteht.

Gemäß der vorliegenden Erfindung wird ein energiearmes Futter eingesetzt, dass hinsichtlich der Parameter Rohprotein und Energiegehalt gemäß den hierin beschriebenen Bereichen eingestellt ist. Dieses energiearme Futter kann aus einem Basisfutter und weiteren Futterzusätzen bestehen. Dabei hat sich gezeigt, dass besonders gute Ergebnisse erzielt werden können, wenn das energiearme Futter als Basisfutter a) mindestens einen pflanzlichen Bestandteil, insbesondere ein Getreide, ein Getreidemehl, ein Getreideschrot, ein Getreideextraktionsschrot, ein Getreidegrieß, eine Getreidekleie oder eine Getreidegrießkleie, und b) ein Fett oder Öl pflanzlichen oder tierischen Ursprungs umfasst. Weiter bevorzugt ist hierbei eine Verwendung in der das Basisfutter mindestens einen pflanzlichen Bestandteil, ausgewählt aus der Gruppen a1) bis a6), insbesondere ein Getreide, ein Getreidemehl, ein Getreidegrieß, ein Getreideschrot, ein Getreideextraktionsschrot, eine Getreidekleie oder eine Getreidegrießkleie und/oder ein Ölsaatprodukt und b) tierisches oder pflanzliches Fett und/oder Öl umfasst, wobei gilt:
a1) Weizen, Weizenmehl, Weizengrieß, Weizenschrot, Weizenkleie, Weizengrießkleie hieraus,
a2) Gerste, Gerstenmehl, Gerstenschrot, Gerstenkleie hieraus,
a3) Mais, Maismehl, Maisschrot hieraus,
a4) Soja, Sojamehl, Sojaschrot oder ein Sojaextraktionsschrot hieraus,
a5) Raps, Rapsmehl, Rapsschrot oder Rapsextraktionsschrot hieraus,
   und/oder
a6) Sonnenblume, Sonnenblumenmehl, Sonnenblumenschrot oder ein Sonnenblumenextraktionsschrot hieraus.

Diesem Grundfutter können weitere Futterzusätze beigefügt sein. Insbesondere kann das energiearme Futter einen weiteren Futtermittelzusatz aus der Gruppe der Mineralstoffe, Aminosäuren, Vitamine, Spurenelemente oder Mischungen hiervon umfassen. Ganz besonders bevorzugt kann dieser Futterzusatz ausgewählt werden aus der Gruppe Lysin, Methionin, Threonin, Thryptophan, Valin und Vitamine sowie Mischungen davon. Weiterhin können auch Kreatin oder Methylgruppen-Donoren, wie z B. Methionin, Betain und Cholin dem Futter beigemischt werden.

Viele dieser Inhaltsstoffe werden in Form einer Mischung (Premix) dem Futtermittel zugesetzt, insbesondere um eine ausreichende Versorgung der Tiere mit essentiellen Nährstoffen sicherzustellen.

Bevorzugte energiearme Futtermittel umfassen
a) mindestens einen kohlenhydratreichen Bestandteil ausgewählt aus der Gruppe Weizen, Weizenschrot, Gerste, Gerstenschrot, Mais und Maisschrot; und
b) einen eiweißreichen Bestandteil ausgewählt aus der Gruppe der Ölsaaten, wie Soja, Sojaschrot, Sojaextraktionsschrot, Raps, Rapsschrot, Rapsextraktionsschrot, Sonnenblume, Sonnenblumenschrot und Sonnenblumenextraktionsschrot; und
c) optional einen energiearmen Bestandteil ausgewählt aus der Gruppe der Kleien, insbesondere Weizenkleie, Weizengrießkleie, Gerstenkleie und Maiskleie; und
d) ein Fett ausgewählt aus der Gruppe der tierischen oder pflanzlichen Fette und Öle.

Der Anteil an kohlenhydratreichen Bestandteilen in den bevorzugten energiearmen Futtern liegt üblicherweise bei 30 - 90 Gew.-%, besonders bevorzugt im Bereich von 40 bis 80 Gew.-%. Der Anteil an eiweißrechen Bestandteilen liegt bevorzugt zwischen 2 und 30 Gew.-%, besonders bevorzugt im Bereich von 4 bis 15 Gew.-%. Der Anteil an zugegebenem Fett bei vorzugsweise 0,5 bis 10 Gew.-%, besonders bevorzugt im Bereich von 1 bis 8 Gew.-% und ganz besonders bevorzugt von 3 bis 6 Gew.-%, immer bezogen auf das Gesamtgewicht des Futters. Die Gewichtsanteile der Futterbestandteile müssen dabei so gewichtet werden, dass der Energiegehalt des gesamten Futters im Bereich von 11,4 bis 12,9 MJ ME/kg Futter liegt.

Die Energiereduktion im Futter kann auf unterschiedliche Art und Weise erfolgen. Grundsätzlich kann ausgehend von einem energiereichen Futter ein Bestandteil des Futters durch einen energieärmeren Bestandteil in einem gewissen Umfang ersetzt werden.

Die Energiereduktion kann z.B. durch die Reduzierung des Anteils an zugegebenem tierischen oder pflanzlichen Fett erfolgen, wobei der Gewichtsanteil an eiweißreichen, kohlenhydratreichen und/oder energiearmen Bestandteilen entsprechend erhöht wird. Energiearme Futter mit reduziertem Gehalt an zugegebenem Fett weisen bevorzugt einen Anteil an Fett im Bereich von 0,5 bis 5 Gew.-%, insbesondere zwischen 1 und 4,5 Gew.-%, und besonders bevorzugt zwischen 1 und 3,5 Gew.-% auf.

Erfolgt die Energiereduktion durch Verringerung des Gewichtsanteils an eiweißreichen Bestandteilen wird der Gewichtsanteil an kohlenhydratreichen und energiearmen Bestandteilen erhöht. Bei Verringerung der eiweißreichen Bestandteile im Futter werden bevorzugt Aminosäuren aus der Gruppe Lysin, Methionin, Threonin, Thryptophan und Valin dem Futter zugegeben, so dass die Reduktion des Energiegehaltes des Futters erreicht wird, ohne dass eine Unterversorgung mit Aminosäuren auftritt. Solche Futter besitzen bevorzugt einen Anteil an eiweißreichen Bestandteilen von 2 bis 15 Gew.-%, bevorzugt von 3 bis 10 Gew.-%. Der Anteil an zusätzlich zugegebenen Aminosäuren liegt vorzugsweise im Bereich von 0,05 bis 5 Gew.-%, besonders bevorzugt im Bereich zwischen 0,1 und 2 Gew.-%.

Weiterhin kann das energiearme Futtermittel einen geringen Anteil an kohlenhydratreichen Bestandteilen besitzen, die durch energiearme Bestandteile, wie im Besonderen durch Kleie ersetzt werden.

Bevorzugt sind vegetarische Diäten, die gegebenenfalls nur tierische Fette als einzigen tierische Komponente enthalten, vorzugsweise werden auch rein vegetarische Diäten verfüttert.

Die Erfindung betrifft weiterhin ein Futtermittel für Schweine umfassend i) eine Zusammensetzung enthaltend Guanidinoessigsäure und ii) ein energiearmes Futter für **Schweine** mit einem Rohproteingehalt im Bereich von 10,0 bis 18,0 Gew.-% bezogen auf das Gesamtgewicht des Futters und einem Energiegehalt im Bereich von 11,4 bis 12,9 MJ ME/kg Futter.

Das Futtermittel ist insbesondere zur Verabreichung während der Mast der Schweine ab einem Lebendgewicht von ≥ 27 kg pro Schwein, vorzugsweise ≥ 60 kg pro Schwein vorgesehen.

Als besonders vorteilhaft hat sich erfindungsgemäß, ein energiearmes Futtermittel herausgestellt, das folgende Bestandteile enthält:
a) Rohprotein in einer Menge von 14 bis 18 Gew.-%, insbesondere von 16 bis 17,5 Gew.-%,
b) Guanidinoessigsäure in einer Menge von 0,01 bis 0,20 Gew.-%, vorzugsweise 0,04 bis 0,10 Gew.-%,
und einen metabolischer Energieinhalt ME im Bereich von 11,4 bis 12,9 MJ ME / kg Futtermittel, vorzugsweise von 12,4 bis 12,8 MJ ME / kg Futtermittel besitzt.

Guanidinoessigsäure kann beispielsweise durch Umsetzung von Glycin und Cyanamid in wässrigen Lösung hergetellt werden. Guanidinoessigsäure ist darüber hinaus kommerziell unter der Bezeichnung Creamino^{®} (AlzChem Trostberg GmbH) erhältlich.

Die Erfindung betrifft weiterhin ein Verfahren zur Verbesserung der Energieverwertung eines energiearmen Futters durch Schweine worin Schweinen ein energiearmes Futter für Schweine mit einem Rohproteingehalt im Bereich von 10,0 bis 20,0 Gew.-% bezogen auf das Gesamtgewicht des Futters und einem Energiegehalt im Bereich von 11,4 bis 12,9 MJ ME/kg Futter während der Mast der Schweine ab einem Lebendgewicht von ≥ 27 kg pro Schwein und weiterhin eine Zusammensetzung enthaltend Guanidinoessigsäure verabreicht werden.

Die bevorzugten Ausgestaltungen der Merkmale des erfindungsgemäßen Verfahrens sind wie hierin zuvor ausgeführt.

Die nachfolgenden Beispiele sollen die vorliegende Erfindung veranschaulichen.

In einem 39 Tage dauernden Fütterungsversuch wurden drei verschiedene Futterkonzepte an Mastschweine mit einem Anfangsgewicht von ~65 kg verfüttert. Pro Futterkonzept wurden 80 Schweine in jeweils 16 Buchten (5 Tiere pro Bucht) untersucht. Die Buchten wurden ausschließlich mit Tieren gleichen Geschlechts, also weiblichen Tieren oder nicht kastrierten Ebern, im Geschlechtsverhältnis 1:1 belegt.

Die drei verschiedenen Futtergruppen wurden auf den Gehalt an metabolischer Energie (ME) und den weiteren Rohnährstoffen basierend auf den Versorgungsempfehlungen des NRC (National Reseach Council oft he National Academies, 2012: Nutrient requirements of Swine/ Committee on Nutrient Requirements of Swine, Board on Agriculture and Natural Resources, Division on Earth and Life Studies. - 11th rev. ed. p. cm.) optimiert. Eine den Energiebedarf deckende Positivkontrollgruppe mit 13,0 MJ ME wurde einer um 0,2 MJ reduzierten Negativkontrollgruppe mit 12,8 MJ ME gegenübergestellt. In einer mit 600 g/t supplementierten Guanidinoessigsäure-Gruppe wurde ein Energiegehalt von 12,7 MJ ME eingestellt.

Die Mastphase umfasste 39 Tage. An Tag 40 wurden die Tiere, die bereits das Schlachtgewicht von -108 kg erreicht hatten, geschlachtet. Aus diesem Grund wurde eine Datenerfassung an diesem Tag vorgenommen.

Die detaillierten Rationen der drei Behandlungen über beide Fütterungsphasen sind in Tabelle 1 dargestellt. Die Rationen waren weizen-, weizengrießkleie-, rapsextraktionsschrot- und sojaextraktionsschrotbasiert. Außerdem wurde tierisches Fett in relevanten Mengen zugegeben. Die Diäten waren isonitrogen, d. h. die Ausstattung an Rohprotein und verdaulichen Aminosäuren war in allen drei Behandlungsgruppen identisch.

**Tabelle 1: Rationszusammensetzung der in der Mastphase verfütterten Futtermittel**

| | Mastphase | | |
|---|---|---|---|
| Futterkomponente/Nährstoff | Pos.kontr. | Neg.kontr. | GAA |
| Weizen (%) | 54,85 | 55,77 | 48,95 |
| Weizengrießkleie (%) | 25,00 | 25,00 | 30,65 |
| Rapsextraktionsschrot (38% XP) (%) | 8,00 | 8,00 | 8,00 |
| Sojaextraktionsschrot (48% XP) (%) | 5,00 | 5,00 | 5,00 |
| tierisches Fett (%) | 4,22 | 3,28 | 4,20 |
| Kalziumkarbonat (%) | 0,95 | 0,97 | 1,09 |
| Monokalziumphosphat (%) | 0,90 | 0,90 | 0,87 |
| Kochsalz (NaCl, %) | 0,47 | 0,48 | 0,59 |
| L-Lysinsulfat (%) | 0,30 | 0,30 | 0,29 |
| Premix (%) | 0,31 | 0,30 | 0,30 |
| Guanidinoessigsäure (%) | 0,00 | 0,00 | 0,06 |

| Kalkulierte Inhaltsstoffe | | | |
|---|---|---|---|
| Rohprotein (%) | 17,1 | 17,2 | 17,2 |
| Rohasche (%) | 5,4 | 5,4 | 5,8 |
| Umsetzbare Energie (MJ/kg) | 13,0 | 12,8 | 12,7 |

Die Leistungen der drei Behandlungsgruppen sind in Tabelle 2 aufgeführt. Die Tiere der Guanidinoessigsäure-Gruppe waren zu Beginn der Mastphase mit 63,9 kg um durchschnittlich ca. 1,8 kg leichter als die Tiere der beiden Kontrollgruppen. Dies war auf die randomisierte Zuteilung der Tiere auf die Versuchsgruppen zurückzuführen. Am letzten Tag der Datenerfassung waren die Tiere durchschnittlich gut 96 kg schwer. Die Tiere aller Gruppen erreichten also ungefähr das gleiche durchschnittliche Endgewicht. Zu Beginn der Mastphase waren die Tiere der Guanidinoessigsäure-Gruppe um rund 1,8 kg leichter als die beiden Kontrollgruppen. Die daraus resultierenden täglichen Zunahmen der Guanidinoessigsäure Gruppe lagen deshalb in der Mastphase mit ca. 830 g/d deutlich über den Werten der Positivkontrollgruppe auf ca. 800 g/d und der Negativkontrollgruppe auf ca. 800 g/d. Die Zulage von Guanidinoessigsäure zu einem Futter mit niedrigerem Energiegehalt konnte also das Energiedefizit kompensieren.

Die Wirkung von Guanidinoessigsäure ließ sich v. a. in den unterschiedlichen täglichen Futteraufnahmen der drei Behandlungsgruppen beobachten. Die Tiere der Positivkontrollgruppe und der GAA-Gruppe fraßen durchgehend in etwa die gleiche Menge Futter pro Tag. Im Gegensatz dazu war die Futteraufnahme der Negativkontrollgruppe grundsätzlich um über 100 g/Tag erhöht. Da die Futteraufnahme von Schweinen durch den energetischen Status des Tieres gesteuert ist, liegt diese Beobachtung in den verschiedenen Energiegehalten der Futter der drei Behandlungsgruppen begründet. Der Energiegehalt der Negativkontrollgruppe war um 0,2 MJ ME abgesenkt. Um dieses Energiedefizit auszugleichen erhöhten die Tiere folglich ihre tägliche Futteraufnahme. Die Tiere der GAA-Gruppe lagen hinsichtlich der täglichen Futteraufnahme auf identischem Niveau mit der Positivkontrolle. Die Zulage von 600 g/t Guanidinoessigsäure konnte also das Energiedefizit von 0,2 MJ ME ausgleichen, obwohl Guanidinoessigsäure selbst keinen nennenswerten Energiegehalt aufweist.

In der Mastphase konnte außerdem mit 2,69 kg Futtermittel / kg Gewichtszunahme eine im Vergleich zur Positivkontrolle um 6 Punkte bzw. 23 Punkte zur Negativkontrolle leicht verbesserte Futterverwertung beobachtet werden. Dieses Verhältnis zeigt wiederum, dass die Tiere der Negativkontrollgruppe das Energiedefizit durch eine Erhöhung der Futteraufnahme ausglichen, um ihr Leistungsniveau zu erhalten, wohingegen die Tiere die Guanidinoessigsäure sogar verbesserte Leistungen mit weniger Futter realisieren konnten. Die Futteraufnahme der Tiere aus der Guanidinoessigsäure-Gruppe entsprach dabei der Positivkontrolle, es wurde keine Erhöhung der Futteraufnahme durch die Gabe von Guanidinoessigsäure im vorliegenden Beispiel festgestellt.

Auch die Energieverwertung der Tiere verbessert sich durch die Gabe von sehr geringen Mengen an Guanidinoessigsäure. Die Tiere der Guanidinoessigsäure-Gruppe benötigten in der Mastphase 2,1 MJ ME (Positivkontrolle) bzw. 4,3 MJ ME (Negativkontrolle) weniger Energie pro kg Zuwachs. Es zeigt sich, dass bei Einsatz von energiearmem Futter in Kombination mit Guanidinoessigsäure die Energieverwertung der Tiere gegenüber der Positivkontrolle stärker verbessert wird als die Futterverwertung. Die Futterverwertung verbessert sich im vorliegenden Beispiel lediglich um ca. 2,2 %, die Energieverwertung aber um ca. 5,8 %.

Die Ergebnisse sind in Tabelle 2 zusammengefasst.

**Tabelle 2**

| Parameter | Behandlung | | |
|---|---|---|---|
| | Positivkontr. | Negativkontr. | Guanidinoessigsäure |
| Tierzahl (n) | 80 | 79 | 79 |
| Buchten (n) | 16 | 16 | 16 |
| Lebendgewicht (kg) am Beginn der Mastphase, Tag 1 | 65,6 | 65,8 | 63,9 |
| Lebendgewicht (kg), Tag 39 | 96,9 | 96,9 | 96,2 |
| Tägl. Zunahmen (g), Tag 1-39 | 803 | 797 | 828 |
| Tägl. Futteraufnahme (g), Tag 1-39 | 2211 | 2324 | 2223 |
| Futterverwertung (kg Futter/kg Zunahme), Tag 1-39 | 2,75 | 2,92 | 2,69 |
| Energieverwertung (MJ ME/kg Zunahme), Tag 1-39 | 36,3 | 38,5 | 34,2 |
| Durchschnittliche Anzahl an Masttagen (ab Beginn der Mastphase) | 52 | 53 | 52 |
| Durchschnittliches Schlachtgewicht (kg) | 108,0 | 107,9 | 107,3 |

Unter Futterverwertung wird die Menge an aufgenommen Futter verstanden, die zu einer Gewichtszunahme des Tieres von einem Kilo führt. Die Energieverwertung ist entsprechend die Energieaufnahme pro einem Kilo Gewichtszunahme.

Der Fütterungsversuch konnte also nachweisen, dass die Zulage von 600 g/t Guanidinoessigsäure zum Futter von Mastschweinen ausreicht, ein Energiedefizit von rund 0,3 MJ ME/kg auszugleichen. Die Tiere, die mit Guanidinoessigsäure versorgt wurden, erreichten nämlich zur energiebedarfsgedeckten Positivkontrolle vergleichbare, teilweise sogar verbesserte Leistungen und veränderten dabei ihre Futteraufnahme nicht. Die Futteraufnahme wird unter anderem durch den energetischen Status der Tiere gesteuert. Dies konnte bei den Tieren der Negativkontrolle beobachtet werden. Diese erreichten zwar ähnliche Zunahmen wie die Positivkontrolle, mussten dafür für aber die tägliche Futteraufnahme um über 100 g erhöhen.

Die Tiere wurden ab Tag 40 bis Tag 74 bei Erreichen des Schlachtgewichts von ca. 108 kg geschlachtet, wobei die Diäten beibehalten wurden. Auch hier zeigt sich, dass durch die Gabe von Guanidinoessigsäure ein Energiedefizit im Futter von ca. 0,3 MJ ME/kg vollständig ausgeglichen wird. Die Anzahl der durchschnittlichen Masttage bis zur Schlachtung bleibt gleich.

## Patentansprüche

1. Verwendung i) einer Zusammensetzung enthaltend Guanidinoessigsäure und ii) eines energiearmen Futters für Schweine mit einem Rohproteingehalt im Bereich von 10,0 bis 20,0 Gew.-% bezogen auf das Gesamtgewicht des Futters und einem Energiegehalt im Bereich von 11,4 bis 12,9 MJ metabolisierbarer Energie (ME)/ kg Futter während der Mast der Schweine ab einem Lebendgewicht von ≥ 27 kg pro Schwein, zur Verbesserung der Energieverwertung des Futters durch die Schweine, wobei die Bestimmung des Rohproteingehalts und der ME wie in der Beschreibung genannt erfolgt.

2. Verwendung nach Anspruch 1, **dadurch gekennzeichnet, dass** die Verbesserung der Energieverwertung des Futters durch die Schweine ein Energiedefizit von mindestens 0,1 MJ ME/kg gegenüber einem entsprechenden Futter ohne Guanidinoessigsäure ausgleicht; und/oder
**dadurch gekennzeichnet, dass** die Energieverwertung des Futters durch die Schweine gegenüber dem energiearmen Futter alleine verbessert wird.

3. Verwendung nach einem der vorgenannten Ansprüche, **dadurch gekennzeichnet, dass** die Zusammensetzung i) als Feststoffzubereitung vermengt mit dem Futter für die Schweine bereitgestellt wird.

4. Verwendung nach einem der vorgenannten Ansprüche, **dadurch gekennzeichnet, dass** die Zusammensetzung i) die Guanidinoessigsäure als freie Säure oder in Form eines Salzes dieser Säure enthält; und/oder
**dadurch gekennzeichnet, dass** die Guanidinoessigsäure in Form eines Salzes der Guanidinoessigsäure verwendet wird, wobei das Salz ausgewählt wird aus der Gruppe der Alkali- oder Erdalkalisalze der Guanidinoessigsäure, insbesondere Natrium-Guanidinoacetat, Kalium-Guanidinoacetat, Magnesium-Guanidinoacetat oder Calcium-Guanidinoacetat.

5. Verwendung nach einem der vorhergehenden Ansprüche, **dadurch gekennzeichnet, dass** die Guanidinoessigsäure in einer Menge von 0,01 bis 0,20 Gew.-%, bevorzugt von 0,02 bis 0,15 Gew.-%, jeweils bezogen auf das Gesamtgewicht des Futters, eingesetzt wird; und/oder
**dadurch gekennzeichnet, dass** die Guanidinoessigsäure in einer Menge von 0,04 bis 0,10 Gew.-% bezogen auf das Gesamtgewicht des Futters, eingesetzt wird.

6. Verwendung nach einem der vorhergehenden Ansprüche, **dadurch gekennzeichnet, dass** die Zusammensetzung i) enthaltend Guanidinoessigsäure und/oder das Futter ii) Aminosäuren aus der Gruppe Lysin, Methionin, Threonin, Thryptophan, Valin oder Glycin oder Mischungen davon als Zusatzstoffe enthalten.

7. Verwendung nach einem der vorhergehenden Ansprüche, **dadurch gekennzeichnet, dass** der Energiegehalt des energiearmen Futters ii) im Bereich von 12,2 bis 12,8 MJ ME/kg Futter liegt.

8. Verwendung nach einem der vorhergehenden Ansprüche, **dadurch gekennzeichnet, dass** die Zusammensetzung enthaltend Guanidinoessigsäure i) in Kombination mit dem energiearmen Futter ii) in der Mast der Schweine ab einem Lebendgewicht von 60 kg eingesetzt wird, bevorzugt bei einem Lebendgewicht von > 60 kg bis zu einem Lebendgewicht von 110 kg.

9. Verfahren zur Verbesserung der Energieverwertung eines energiearmen Futters durch Schweine, worin Schweinen ein energiearmes Futter für Schweine mit einem Rohproteingehalt im Bereich von 10,0 bis 20,0 Gew.-% bezogen auf das Gesamtgewicht des Futters und einem Energiegehalt im Bereich von 11,4 bis 12,9 MJ metabolisierbarer Energie (ME)/kg Futter während der Mast der Schweine ab einem Lebendgewicht von ≥ 27 kg pro Schwein und weiterhin eine Zusammensetzung enthaltend Guanidinoessigsäure verabreicht werden, wobei die Bestimmung des Rohproteingehalts und der ME wie in der Beschreibung genannt erfolgt.

10. Verfahren nach Anspruch 9, worin die Verbesserung der Energieverwertung des Futters durch die Schweine ein Energiedefizit von mindestens 0,1 MJ ME/kg gegenüber einem entsprechenden Futter ohne Guanidinoessigsäure ausgleicht; und/oder
worin die Energieverwertung des Futters durch die Schweine gegenüber dem energiearmen Futter alleine verbessert wird.

11. Verfahren nach einem der Ansprüche 9 oder 10, worin die Zusammensetzung i) als Feststoffzubereitung vermengt mit dem Futter für die Schweine bereitgestellt wird.

12. Verfahren nach einem der Ansprüche 9-11, worin die Zusammensetzung i) die Guanidinoessigsäure als freie Säure oder in Form eines Salzes dieser Säure enthält; und/oder
worin die Guanidinoessigsäure in Form eines Salzes der Guanidinoessigsäure verwendet wird, wobei das Salz ausgewählt wird aus der Gruppe der Alkali- oder Erdalkalisalze der Guanidinoessigsäure, insbesondere Natrium-Guanidinoacetat, Kalium-Guanidinoacetat, Magnesium-Guanidinoacetat oder Calcium-Guanidinoacetat.

13. Verfahren nach einem der Ansprüche 9-12, worin die Guanidinoessigsäure in einer Menge von 0,01 bis 0,20 Gew.-%, bevorzugt von 0,02 bis 0,15 Gew.-%, jeweils bezogen auf das Gesamtgewicht des Futters, eingesetzt wird; und/oder worin die Guanidinoessigsäure in einer Menge von 0,04 bis 0,10 Gew.-% bezogen auf das Gesamtgewicht des Futters, eingesetzt wird.

14. Verfahren nach einem der Ansprüche 9-13, worin die Zusammensetzung i) enthaltend Guanidinoessigsäure und/oder das Futter ii) Aminosäuren aus der Gruppe Lysin, Methionin, Threonin, Thryptophan, Valin oder Glycin oder Mischungen davon als Zusatzstoffe enthalten.

15. Verfahren nach einem der Ansprüche 9-14, worin der Energiegehalt des energiearmen Futters ii) im Bereich von 12,2 bis 12,8 MJ ME/kg Futter liegt.

16. Verfahren nach einem der Ansprüche 9-15, worin die Zusammensetzung enthaltend Guanidinoessigsäure i) in Kombination mit dem energiearmen Futter ii) in der Mast der Schweine ab einem Lebendgewicht von 60 kg eingesetzt wird, bevorzugt bei einem Lebendgewicht von > 60 kg bis zu einem Lebendgewicht von 110 kg.

17. Futtermittel für Schweine umfassend
i) eine Zusammensetzung enthaltend Guanidinoessigsäure und
ii) ein energiearmes Futter für Schweine mit einem Rohproteingehalt im Bereich von 10,0 bis 18,0 Gew.-% bezogen auf das Gesamtgewicht des Futters und einem Energiegehalt im Bereich von 11,4 bis 12,9 MJ metabolisierbarer Energie (ME)/kg Futter, wobei die Bestimmung des Rohproteingehalts und der ME wie in der Beschreibung genannt erfolgt.

18. Futtermittel für Schweine nach Anspruch 17 zur Verabreichung während der Mast der Schweine ab einem Lebendgewicht von ≥ 27 kg pro Schwein; und/oder zur Verbesserung der Energieverwertung des Futters durch die Schweine.

19. Futtermittel nach einem der Ansprüche 17 oder 18,
worin das energiearme Futter einen Rohproteingehalt im Bereich von 14 bis 18 Gew.-%, insbesondere von 16 bis 17,5 Gew.-% bezogen auf das Gesamtgewicht des Futters und einen Energiegehalt im Bereich von 11,4 bis 12,9 MJ ME/kg Futtermittel, insbesondere von 12,4 bis 12,8 MJ ME/kg Futtermittel aufweist und Guanidinoessigsäure in einer Menge von 0,01 bis 0,20 Gew.-%, insbesondere 0,04 bis 0,10 Gew.-%, bezogen auf das Gesamtgewicht des Futters.

## Claims

1. Use of i) a composition comprising guanidinoacetic acid and ii) a low energy feed for pigs having a crude protein content in the range of 10.0 to 20.0 wt. % based on the total weight of the feed and an energy content in the range of 11.4 to 12.9 MJ metabolizable energy (ME)/kg feed during fattening of the pigs from a live weight of ≥ 27 kg per pig, for improving the energy utilization of the feed by the pigs, wherein determination of the crude protein content and the ME is performed as mentioned in the description.

2. Use according to claim 1, **characterized in that** the improvement in the energy utilization of the feed by the pigs compensates for an energy deficit of at least 0.1 MJ ME/kg compared to a corresponding feed without guanidinoacetic acid;
and/or
**characterized in that** the energy utilization of the feed by the pigs is improved compared to the low energy feed alone.

3. Use according to any one of the preceding claims, **characterized in that** the composition i) is provided as a solid preparation mixed with the feed for the pigs.

4. Use according to any one of the preceding claims, **characterized in that** the composition i) comprises guanidinoacetic acid as free acid or in the form of a salt of this acid; and/or
**characterized in that** the guanidinoacetic acid is used in the form of a salt of the guanidinoacetic acid, the salt being selected from the group of alkali metal or alkaline earth metal salts of guanidinoacetic acid, in particular sodium guanidinoacetate, potassium guanidinoacetate, magnesium guanidinoacetate or calcium guanidinoacetate.

5. Use according to any one of the preceding claims, **characterized in that** the guanidinoacetic acid is used in an amount of from 0.01 to 0.20 wt. %, preferably from 0.02 to 0.15 wt. %, in each case based on the total weight of the feed; and/or
**characterized in that** the guanidinoacetic acid is used in an amount of from 0.04 to 0.10 wt. % based on the total weight of the feed.

6. Use according to any one of the preceding claims, **characterized in that** the composition i) comprising guanidinoacetic acid and/or the feed ii) comprise amino acids from the group lysine, methionine, threonine, thryptophan, valine or glycine or mixtures thereof as additives.

7. Use according to any one of the preceding claims, **characterized in that** the energy content of the low energy feed ii) is in the range of 12.2 to 12.8 MJ ME/kg feed.

8. Use according to any one of the preceding claims, **characterized in that** the composition comprising guanidinoacetic acid i) is used in combination with the low energy feed ii) in the fattening of the pigs from a live weight of 60 kg, preferably at a live weight of > 60 kg up to a live weight of 110 kg.

9. Method for improving the energy utilization of a low energy feed by pigs, wherein pigs are administered a low energy feed for pigs having a crude protein content in the range of 10.0 to 20.0 wt. % based on the total weight of the feed and an energy content in the range of 11.4 to 12.9 MJ metabolizable energy (ME)/kg feed during fattening of the pigs from a live weight of ≥ 27 kg per pig and further a composition containing guanidinoacetic acid, wherein determination of the crude protein content and the ME is performed as mentioned in the description.

10. Method according to claim 9, wherein the improvement of the energy utilization of the feed by the pigs compensates for an energy deficit of at least 0.1 MJ ME/kg compared to a corresponding feed without guanidinoacetic acid; and/or
wherein the energy utilization of the feed by the pigs is improved compared to the low energy feed alone.

11. Method according to any one of claims 9 or 10, wherein the composition i) is provided as a solid preparation mixed with the feed for the pigs.

12. Method according to any one of claims 9-11, wherein the composition i) comprises guanidinoacetic acid as a free acid or in the form of a salt of this acid; and/or
wherein the guanidinoacetic acid is used in the form of a salt of the guanidinoacetic acid, the salt being selected from the group of alkali metal or alkaline earth metal salts of guanidinoacetic acid, in particular sodium guanidinoacetate, potassium guanidinoacetate, magnesium guanidinoacetate or calcium guanidinoacetate.

13. Method according to any one of claims 9-12, wherein the guanidinoacetic acid is used in an amount of from 0.01 to 0.20 wt. %, preferably from 0.02 to 0.15 wt. %, in each case based on the total weight of the feed; and/or wherein the guanidinoacetic acid is used in an amount of from 0.04 to 0.10 wt. % based on the total weight of the feed.

14. Method according to any one of claims 9-13, wherein the composition i) comprising guanidinoacetic acid and/or the feed ii) comprise amino acids from the group lysine, methionine, threonine, thryptophan, valine or glycine or mixtures thereof as additives.

15. Method according to any one of claims 9-14, wherein the energy content of the low energy feed ii) is in the range of 12.2 to 12.8 MJ ME/kg feed.

16. Method according to any one of claims 9-15, wherein the composition comprising guanidinoacetic acid i) is used in combination with the low energy feed ii) in the fattening of the pigs from a live weight of 60 kg, preferably at a live weight of > 60 kg up to a live weight of 110 kg.

17. Feed for pigs comprising
i) a composition comprising guanidinoacetic acid and
ii) a low energy feed for pigs having a crude protein content in the range of 10.0 to 18.0 wt. % based on the total weight of the feed and an energy content in the range of 11.4 to 12.9 MJ metabolizable energy (ME)/kg feed, wherein determination of the crude protein content and the ME is performed as mentioned in the description.

18. Feed for pigs according to claim 17 for administration during fattening of the pigs from a live weight of ≥ 27 kg per pig; and/or
for improving the energy utilization of the feed by the pigs.

19. Feed according to any one of claims 17 or 18,
wherein the low energy feed has a crude protein content in the range of 14 to 18 wt. %, in particular of 16 to 17.5 wt. % based on the total weight of the feed, and an energy content in the range of 11.4 to 12.9 MJ ME/kg of feed, in particular of 12.4 to 12.8 MJ ME/kg of feed, and
guanidinoacetic acid in an amount of 0.01 to 0.20 wt. %, in particular 0.04 to 0.10 wt. %, based on the total weight of the feed.

## Revendications

1. Utilisation i) d'une composition contenant de l'acide guanidinoacétique et ii) d'un aliment à faible teneur énergétique pour porcs ayant une teneur en protéines brutes comprise entre 10,0 et 20,0 % en poids par rapport au poids total de l'aliment et une teneur énergétique comprise entre 11,4 et 12,9 MJ d'énergie métabolisable (EM)/kg d'aliment pendant l'engraissement des porcs à partir d'un poids vif ≥ 27 kg par porc, pour améliorer l'utilisation énergétique de l'aliment par les porcs, la teneur en protéines brutes et la EM étant déterminées comme indiqué dans la description.

2. Utilisation selon la revendication 1, **caractérisée en ce que** l'amélioration de l'utilisation énergétique de l'aliment par les porcs compense un déficit énergétique d'au moins 0,1 MJ EM/kg par rapport à un aliment correspondant sans acide guanidinoacétique ; et/ou
**caractérisée en ce que** l'utilisation énergétique de l'aliment par les porcs est améliorée par rapport à l'aliment pauvre en énergie seul.

3. Utilisation selon l'une des revendications précédentes, **caractérisée en ce que** la composition i) est fournie sous forme de préparation solide mélangée à l'aliment pour les porcs.

4. Utilisation selon l'une des revendications précédentes, **caractérisée en ce que** la composition i) contient l'acide guanidinoacétique sous forme d'acide libre ou sous forme d'un sel de cet acide ; et/ou
**caractérisée en ce que** l'acide guanidinoacétique est utilisé sous forme d'un sel de l'acide guanidinoacétique, le sel étant choisi dans le groupe des sels alcalins ou alcalino-terreux de l'acide guanidinoacétique, en particulier le guanidinoacétate de sodium, le guanidinoacétate de potassium, le guanidinoacétate de magnésium ou le guanidinoacétate de calcium.

5. Utilisation selon l'une des revendications précédentes, **caractérisée en ce que** l'acide guanidinoacétique est utilisé en une quantité de 0,01 à 0,20 % en poids, de préférence de 0,02 à 0,15 % en poids, respectivement par rapport au poids total de l'aliment ; et/ou **caractérisée en ce que** l'acide guanidinoacétique est utilisé en une quantité de 0,04 à 0,10 % en poids par rapport au poids total de l'aliment.

6. Utilisation selon l'une des revendications précédentes, **caractérisée en ce que** la composition i) contenant de l'acide guanidinoacétique et/ou l'aliment ii) contient des acides aminés choisis parmi le groupe comprenant la lysine, la méthionine, la thréonine, le tryptophane, la valine ou la glycine ou des mélanges de ceux-ci en tant qu'additifs.

7. Utilisation selon l'une des revendications précédentes, **caractérisée en ce que** la teneur énergétique de l'aliment pauvre en énergie ii) est comprise entre 12,2 et 12,8 MJ EM/kg d'aliment.

8. Utilisation selon l'une des revendications précédentes, **caractérisée en ce que** la composition contenant de l'acide guanidinoacétique i) en combinaison avec l'aliment pauvre en énergie ii) est utilisée dans l'engraissement des porcs à partir d'un poids vif de 60 kg, de préférence pour un poids vif > 60 kg jusqu'à un poids vif de 110 kg.

9. Procédé pour améliorer l'utilisation énergétique d'un aliment pauvre en énergie par les porcs, dans lequel on administre aux porcs un aliment pauvre en énergie pour porcs ayant une teneur en protéines brutes comprise entre 10,0 et 20,0 % en poids par rapport au poids total de l'aliment et une teneur énergétique comprise entre 11,4 et 12,9 MJ d'énergie métabolisable (EM)/kg d'aliment pendant l'engraissement des porcs à partir d'un poids vif ≥ 27 kg par porc, et en outre une composition contenant de l'acide guanidinoacétique, la détermination de la teneur en protéines brutes et de la EM étant effectuée comme indiqué dans la description.

10. Procédé selon la revendication 9, dans lequel l'amélioration de l'utilisation de l'énergie de l'aliment par les porcs compense un déficit énergétique d'au moins 0,1 MJ EM/kg par rapport à un aliment correspondant sans acide guanidinoacétique ; et/ou dans lequel l'utilisation de l'énergie de l'aliment par les porcs est améliorée par rapport à l'aliment pauvre en énergie seul.

11. Procédé selon l'une des revendications 9 ou 10, dans lequel la composition i) est fournie sous forme de préparation solide mélangée à l'aliment pour les porcs.

12. Procédé selon l'une des revendications 9 à 11, dans lequel la composition i) contient l'acide guanidinoacétique sous forme d'acide libre ou sous forme d'un sel de cet acide ; et/ou
dans lequel l'acide guanidinoacétique est utilisé sous forme d'un sel de l'acide guanidinoacétique, le sel étant choisi dans le groupe des sels alcalins ou alcalino-terreux de l'acide guanidinoacétique, en particulier le guanidinoacétate de sodium, le guanidinoacétate de potassium, le guanidinoacétate de magnésium ou le guanidinoacétate de calcium.

13. Procédé selon l'une des revendications 9 à 12, dans lequel l'acide guanidinoacétique est utilisé en une quantité de 0,01 à 0,20 % en poids, de préférence de 0,02 à 0,15 % en poids, respectivement par rapport au poids total de l'aliment ; et/ou dans lequel l'acide guanidinoacétique est utilisé en une quantité de 0,04 à 0,10 % en poids par rapport au poids total de l'aliment.

14. Procédé selon l'une des revendications 9 à 13, dans lequel la composition i) contenant de l'acide guanidinoacétique et/ou l'aliment ii) contient des acides aminés choisis parmi le groupe comprenant la lysine, la méthionine, la thréonine, le tryptophane, la valine ou la glycine ou des mélanges de ceux-ci en tant qu'additifs.

15. Procédé selon l'une des revendications 9 à 14, dans lequel la teneur énergétique de l'aliment pauvre en énergie ii) est comprise entre 12,2 et 12,8 MJ EM/kg d'aliment.

16. Procédé selon l'une des revendications 9 à 15, dans lequel la composition contenant de l'acide guanidinoacétique i) en combinaison avec l'aliment pauvre en énergie ii) est utilisée dans l'engraissement des porcs à partir d'un poids vif de 60 kg, de préférence pour un poids vif > 60 kg jusqu'à un poids vif de 110 kg.

17. Aliment pour porcs comprenant
i) une composition contenant de l'acide guanidinoacétique et
ii) un aliment pauvre en énergie pour porcs ayant une teneur en protéines brutes comprise entre 10,0 et 18,0 % en poids par rapport au poids total de l'aliment et une teneur énergétique comprise entre 11,4 et 12,9 MJ d'énergie métabolisable (EM)/kg d'aliment, la teneur en protéines brutes et la EM étant déterminées comme indiqué dans la description.

18. Aliment pour porcs selon la revendication 17, destiné à être administré pendant l'engraissement des porcs à partir d'un poids vif ≥ 27 kg par porc ; et/ou destiné à améliorer l'utilisation de l'énergie contenue dans l'aliment par les porcs.

19. Aliment pour animaux selon l'une des revendications 17 ou 18,
dans lequel l'aliment pauvre en énergie a une teneur en protéines brutes comprise entre 14 et 18 % en poids, en particulier entre 16 et 17,5 % en poids par rapport au poids total de l'aliment, et une teneur énergétique comprise entre 11,4 et 12,9 MJ EM/kg d'aliment, en particulier entre 12,4 et 12,8 MJ EM/kg d'aliment, et contient de l'acide guanidinoacétique en une quantité comprise entre 0,01 et 0,20 % en poids, en particulier entre 0,04 et 0,10 % en poids, par rapport au poids total de l'aliment.
